(19) Europäisches Patentamt
European Patent Office
Office européen des brevets

(11) **EP 4 283 813 A1**

(12) **EUROPEAN PATENT APPLICATION**

(43) Date of publication:
**29.11.2023 Bulletin 2023/48**

(21) Application number: **23158405.3**

(22) Date of filing: **24.02.2023**

(51) International Patent Classification (IPC):
**H02J 3/28** (2006.01)    **H02J 15/00** (2006.01)

(52) Cooperative Patent Classification (CPC):
**H02J 3/28; H02J 15/008;** H02J 3/004;
H02J 2300/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.05.2022 JP 2022083533**

(71) Applicant: **Hitachi, Ltd.**
**Tokyo 100-8280 (JP)**

(72) Inventors:
• **FURUTA, Futoshi**
**Tokyo, 100-8280 (JP)**
• **WATANABE, Keiji**
**Tokyo, 100-8280 (JP)**
• **ISHIKAWA, Takao**
**Tokyo, 100-8280 (JP)**

(74) Representative: **Mewburn Ellis LLP**
**Aurora Building**
**Counterslip**
**Bristol BS1 6BX (GB)**

(54) **WATER ELECTROLYSIS SYSTEM MANAGING POWER SUPPLY OF RENEWABLE ENERGY**

(57)    To improve utilization rate of a water electrolysis apparatus in a water electrolysis system that manages power supply of renewable energy. A water electrolysis system manages power supply of renewable energy for a system and an electrolytic cell of a water electrolysis apparatus. The water electrolysis system: obtains renewable energy power and operation information of renewable energy device from a power conversion apparatus connected to the renewable energy device; calculates an estimate value of the renewable energy power based on the renewable energy power and the operation information; calculates an estimate value of a surplus power at a predetermined timing based on the estimate value of the renewable energy power and a sold power; calculates an electrolysis power command value by performing a conversion process based on an acceptable ramp rate of the electrolytic cell with respect to the estimate value of the surplus power before the predetermined timing and the estimate value of the surplus power at the predetermined timing; and inputs the electrolysis power command value into a power conversion apparatus of the electrolytic cell.

Fig. 2

EP 4 283 813 A1

**Description**

Technical Field

The present invention relates to a water electrolysis system that manages a power supply of renewable energy.

Background Art

Toward achievement of a low carbon society, instead of thermal power generation utilizing a fossil fuel, power generation utilizing renewable energy (hereinafter abbreviated as "renewable energy" in some cases) such as sunlight and wind power has been become active. However, since generated power by the renewable energy greatly varies due to natural phenomena, it cannot directly substitute for system power.

Options to store power using a storage battery or convert it to a storable means (for example, hydrogen) by a method other than converting it to power are required. In the storage battery, power storage facilities and their cost increase in proportion to an amount of power to be stored. On the other hand, once conversion equipment is in place for hydrogen, measures such as preparing tanks and transporting hydrogen are possible, and the cost does not increase much for a storage amount. Thus, hydrogen is regarded as an important energy carrier when utilizing the renewable energy.

However, the cost when producing hydrogen by the renewable energy is still high compared with a case of generating power by the fossil fuel. This is due to a fact that it is impossible to follow variations in the power generated from the renewable energy, which sometimes makes it impossible to utilize the power, and a fact that the generated power sometimes becomes larger than an equipment capacity due to a large variation width of the renewable energy, which results in limitation on an operation rate of a hydrogen production equipment.

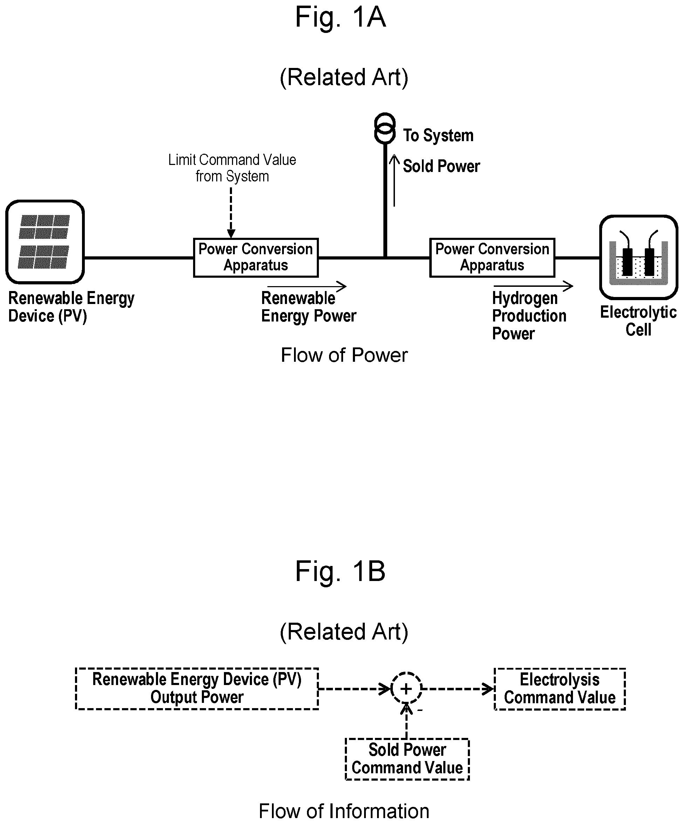

A typical example of a conventional water electrolysis system that obtains power from one or more renewable energy devices to produce hydrogen is shown in Figs. 1A and 1B. The renewable energy device includes a photovoltaic cell (hereinafter abbreviated as "PV" in some cases), a wind power generator, and the like. By power conversion apparatuses, such as DC/AC converters and AC/DC/AC converters connected to these, power generation at an optimum operating point (ordinarily, a point of maximum power) of each device and conversion to AC are performed, which is connected to a system to compensate the fossil fuel power. Furthermore, hydrogen is produced by inputting a part of the power into an electrolytic cell. Since the electrolytic cell operates on direct current, the AC power from the system is connected to the electrolytic cell after having been converted to direct current by the power conversion apparatus, which is a dedicated AC/DC converter.

Of the power obtained from the renewable energy, the power used for hydrogen production is remainder after subtracting the power supplied to the system from the generated power. Thus, in the drawing, the AC/DC is controlled such that only the power obtained by subtracting a sold power volume from the power generated from the renewable energy is supplied to the electrolytic cell.

Configurations disclosed in Patent Literatures 1 and 2 are known as configurations for supplying power of renewable energy to a water electrolysis apparatus for producing hydrogen.

The technique of Patent Literature 1 efficiently and stably produces hydrogen using surplus power of generated power from renewable energy, which easily varies, taking each advantage of water electrolytic cell and SOEC. By preliminarily predicting a surplus power situation using weather forecast and the like, the surplus power that is actually supplied is separated into stable power that is maintained constant and unstable power based on the surplus power situation.

The technique of Patent Literature 2 produces hydrogen by a water electrolysis apparatus after smoothing unstable power of renewable energy using charging and discharging of a storage battery. Surplus power of smoothed power in the operation of the electrolysis apparatus is supplied to the system, and shortage power is compensated by discharging from the storage battery. Unstable power by renewable energy can be stored not only in a storage battery equipment cost of which is high but also in an electrolytic cell, and stable power can be supplied to the system. It is possible to operate according to response speed of the water electrolytic cell.

Citation List

Patent Literature

Patent Literature 1: JP 2019-173082 A
Patent Literature 2: JP 2018-85862 A

Summary of Invention

Technical Problem

However, the conventional techniques have problems that there is room for improvement in utilization efficiency of a water electrolysis apparatus.

When the power generated by renewable energy is directly input into the power for hydrogen production, two problems occur in efficiency. The first problem is that an electrolytic cell sometimes cannot follow changes of renewable energy power. The renewable energy power varies according to changes of solar radiation and wind speed, while the power that the electrolytic cell can accept is limited by its cell structure and characteristics of the electrolytic cell, operation temperature, and further, operation statuses of pumps and compressors as auxiliary devices. Thus, in an electrolysis apparatus, variable parameters (such as a ramp rate) are often specified.

A second problem is that a variation range of the renewable energy power is large, and it is sometimes impossible to make full use of varying power. When a rating of the electrolysis apparatus is increased in an attempt to utilize power up to an upper limit of the variation range, utilization rate of the electrolytic cell as equipment decreases. On the other hand, while reducing the rating of the electrolysis apparatus apparently improves the utilization rate, it means that the power outside the rating is wasted, and it is difficult to say that the renewable energy is being effectively used.

In a technique of Patent Literature 1, while the variations of the renewable energy power are preliminarily estimated in order to utilize unstable power of renewable energy, since it is estimated from weather prediction, a deviation occurs with respect to the actual generated power. While a value obtained by subtracting a demand amount from an amount of generated power from the renewable energy is specified as surplus power, the surplus power is not likely to be flown through a system or is likely to be restricted, and the amount of generated power from the renewable energy is not necessarily the maximum power. Thus, it is expected that prediction accuracy of the renewable energy is poor, and a response speed with respect to variation in renewable energy will be low.

In a technique of Patent Literature 2, while the unstable power of renewable energy is smoothed with a filter when it is stabilized, when this characteristic (for example, a passband) does not match the response speed of the electrolytic cell, it will be supplied to the system as an unstable part from discharging operation of the storage battery. A large-capacity storage battery is required for complete stabilization.

The present invention has been made to solve such problems, and it is an object of the present invention to improve utilization rate of a water electrolysis apparatus in a water electrolysis system that manages power supply of renewable energy.

Solution to Problem

A water electrolysis system according to one example of the present invention manages power supply of renewable energy for a system and an electrolytic cell of a water electrolysis apparatus. The water electrolysis system: obtains renewable energy power and operation information of renewable energy device from a power conversion apparatus connected to the renewable energy device; calculates an estimate value of the renewable energy power based on the renewable energy power and the operation information; calculates an estimate value of a surplus power at a predetermined timing based on the estimate value of the renewable energy power and a sold power; calculates an electrolysis power command value by performing a conversion process based on an acceptable ramp rate of the electrolytic cell with respect to the estimate value of the surplus power before the predetermined timing and the estimate value of the surplus power at the predetermined timing; and inputs the electrolysis power command value into a power conversion apparatus of the electrolytic cell.

Advantageous Effects of Invention

According to the present invention, in the water electrolysis system that manages the power supply of renewable energy, the utilization efficiency of the water electrolysis apparatus can be improved.

For example, it is possible to reduce a load caused by a sudden change in power to the electrolytic cell. For example, it is possible to increase the amount of power used for electrolysis in the electrolytic cell, thus allowing the improved efficiency of the electrolysis.

Thus, for example, even in situations where the power from renewable energy varies, it is possible to allocate the power for hydrogen production without losing the power. Furthermore, when an output of renewable energy power is restricted due to constraint from a system side, since the restriction can be reduced, the power can be used for hydrogen production. As a result, equipment operation rate of the electrolytic cell increases, and hydrogen production cost is reduced.

Brief Description of Drawings

Figs. 1A and 1B show a typical example of a conventional water electrolysis system.
Fig. 2 is a configuration of a water electrolysis system according to Embodiment 1 of the present invention.
Fig. 3A is a moving average type filter.
Fig. 3B is a basis for calculating a value of *k* in Fig. 3A.
Figs. 4A-4C show a progress example of arithmetic in Embodiment 1.
Fig. 5 is a configuration of a water electrolysis system according to Embodiment 2 of the present invention.
Fig. 6A is a configuration of a filter part according to Embodiment 3 of the present invention.
Fig. 6B is a configuration of a filter part and an electrolytic cell according to Embodiment 3.
Fig. 7 is a configuration of a filter part and an electrolytic cell according to Embodiment 4 of the present invention.
Figs. 8A and 8B show an outline of processes according to Embodiment 5 of the present invention.
Fig. 9 is a configuration of a filter part and an electrolytic cell according to Embodiment 7 of the present invention.

Description of Embodiments

The following describes Embodiments of the present invention based on the attached drawings.

<Embodiment 1>

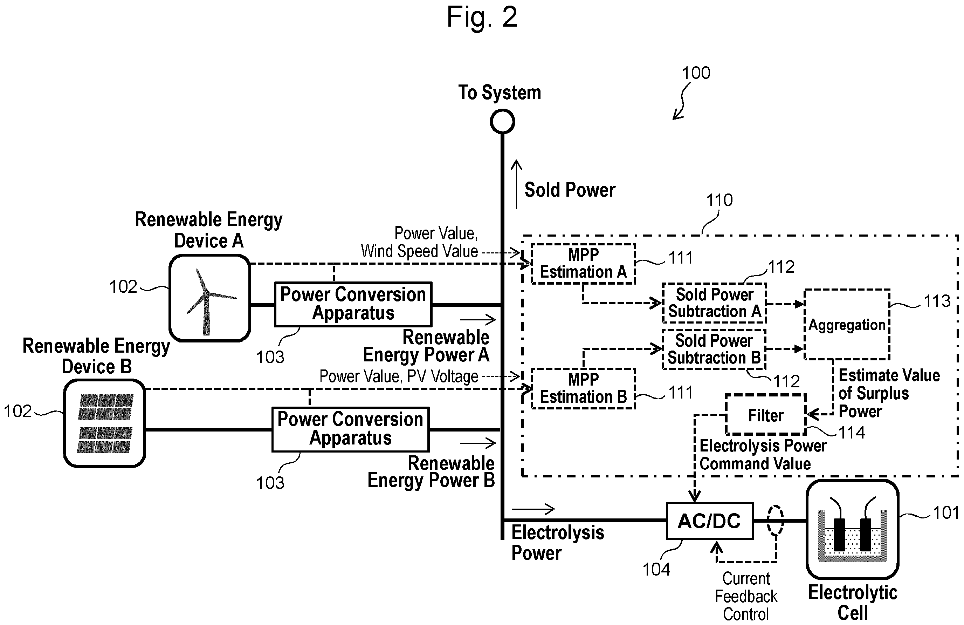

Fig. 2 illustrates a configuration of a water electrolysis system 100 according to Embodiment 1 of the present invention. The water electrolysis system 100 is a system managing power supply of renewable energy for a system and an electrolytic cell 101 of a water electrolysis apparatus. The system means a power system and is, for example, a commercial power system but not limited to this.

The water electrolysis system 100 may further function as a hydrogen production apparatus and may function as an electrolytic cell control apparatus for hydrogen production using the renewable energy. The water electrolysis system 100 may function as a system aggregating information of renewable energy devices.

The water electrolysis system 100 may function as a data management platform. For example, it may operate in conjunction with a renewable energy power generation system, a hydrogen production system utilizing low carbon energy, a power price market, and the like.

One or more renewable energy devices 102 (PV and wind power generation in Fig. 2) are connected to wiring to the system through a power conditioner (PCS) as a power conversion apparatus 103.

The electrolytic cell 101 is connected to the wiring to the system via an AC/DC converter 104 as another power conversion apparatus. While the AC/DC converter 104 may simply convert alternating current to direct current, furthermore, as illustrated in the drawing, it may have a current feedback control and may have a function transmitting commanded power to the electrolytic cell 101.

The water electrolysis system 100 includes a control apparatus 110 that controls the entire water electrolysis system 100. Components of the water electrolysis system 100 (for example, the power conversion apparatus 103 and the AC/DC converter 104) operate in accordance with the control of the control apparatus 110. The control apparatus 110 may include, for example, a computer, and the computer may include an arithmetic means and a storage means. The storage means may store a program. The control apparatus 110 may cause the water electrolysis system 100 to perform the operations described herein by the arithmetic means executing the program.

The power conversion apparatus 103 is not just a DC/AC converter or AC/DC/AC converter and has a function of obtaining operation information from the connected renewable energy devices 102.

The water electrolysis system 100 (for example, the control apparatus 110, but not limited to this) obtains power (renewable energy power) output from the power conversion apparatus 103 connected to each renewable energy device 102. The operation information of each renewable energy device 102 is obtained from each power conversion apparatus 103. For example, in a case of PV, a solar radiation amount or a PV voltage is obtained as the operation information.

The control apparatus 110 includes an MPP estimation part 111 that estimates the maximum power point (MPP), and the MPP estimation part 111 can maximize the power obtained from the renewable energy device 102 and the power conversion apparatus 103 based on the operation information. For example, by setting an appropriate DC voltage for the solar radiation amount or the PV voltage to the PV side via the power conversion apparatus 103, the MPP estimation part 111 can cause the maximum power to be output in accordance with PV characteristics. In a case of wind power generation, obtaining wind conditions (for example, a wind speed value, a wind direction, and the like) as the operation information and setting an appropriate rotation speed of a windmill for the wind conditions via the power conversion apparatus 103 can extract the maximum power.

Thus, the water electrolysis system 100 obtains the operation information of the renewable energy power and the renewable energy device 102 from the power conversion apparatus 103 connected to the renewable energy device 102. Then, an estimate value (for example, an estimate value corresponding to a case where the power is maximized) of the renewable energy power output from the power conversion apparatus 103 is calculated based on the renewable energy power and the operation information.

This estimate value may be an estimate value representing temporal variations in the renewable energy power in the past and/or at a present point of time or may be an estimate value including a predicted value representing future renewable energy power. Also, a case where the renewable energy power obtained from the power conversion apparatus 103 is directly treated as an estimate value is not particularly excluded (in that case, the MPP estimation part 111 is sometimes omittable).

The control apparatus 110 includes a sold power subtraction part 112. The sold power subtraction part 112 calculates an estimate value of surplus power at a predetermined timing based on the estimate value of the renewable energy power and sold power (the power that is sent to the system). For example, by subtracting the sold power from the estimate value of the renewable energy power, the estimate value of the surplus power at the present time is calculated.

As illustrated in Fig. 2, when the water electrolysis system 100 constitutes a renewable energy site including a plurality of renewable energy devices 102, the control apparatus 110 may include an aggregation part 113. When the sold power differs for each renewable energy device 102, the plurality of sold power subtraction parts 112 subtract the corresponding sold powers from the respective corresponding estimate values of the renewable energy powers. Then, the aggregation part 113 aggregates the estimate value of the surplus power of each of the renewable energy devices 102 and calculates a final estimate value of the surplus power.

Here, an acceptable ramp rate of the electrolytic cell 101 will be described. Typically, from a viewpoint of avoiding deterioration of the electrolytic cell 101, it is not preferred for a power value input into the electrolytic cell 101 to rapidly vary. In view of this, the acceptable ramp rate is specified for the electrolytic cell 101. The acceptable ramp rate represents the maximum acceptable change rate in the power value input into the electrolytic cell 101. For example, the acceptable ramp rate is expressed by a ratio of the power value that can be changed within a certain period of time to a rated power. Alternatively, the acceptable ramp rate is expressed by the time it takes for an electrolytic value to reach 100% from 0% of a rating.

The acceptable ramp rate can be specified so as to avoid deterioration of an electrolytic cell apparatus by comprehensively considering characteristics of the electrolytic cell apparatus (in particular, operating characteristics of electrodes and auxiliary devices that constitute the electrolytic cell 101).

The estimate value of the surplus power calculated as described above by the sold power subtraction part 112 and the aggregation part 113 directly has the variation of the renewable energy. The variation is likely to exceed the acceptable ramp rate of the electrolytic cell 101, and in that case, it is not appropriate as an input power value into the electrolytic cell 101.

In view of this, the control apparatus 110 includes a filter part 114. The filter part 114 performs a conversion process (filter process in this Embodiment) for the estimate value of the surplus power, calculates an appropriate electrolysis power command value, and transmit it to the AC/DC converter 104.

The filter part 114 performs the filter process using, for example, a lowpass filter. Thus, even if the estimate value of the surplus power rapidly changes, the electrolysis power command value gradually changes.

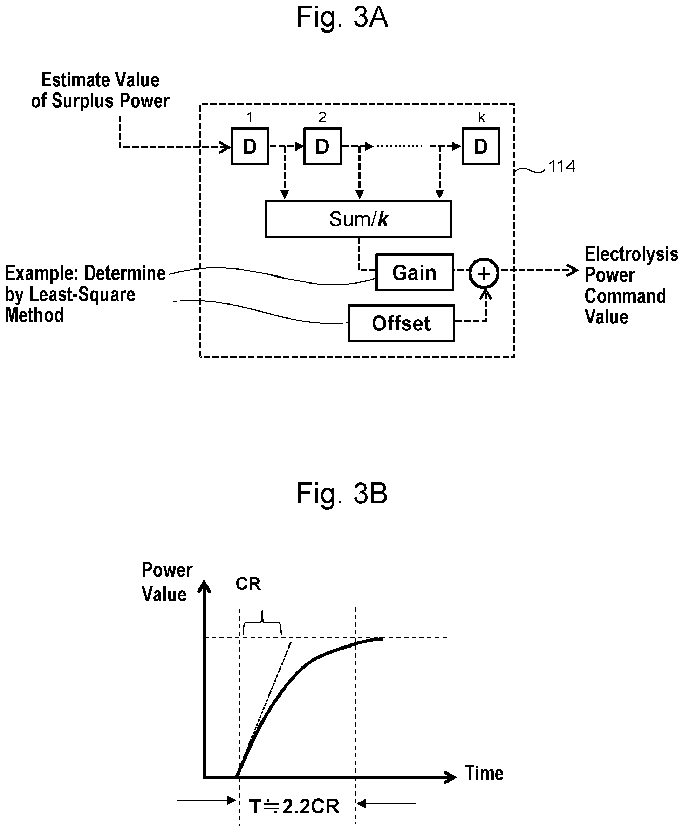

As a specific configuration of the filter used by the filter part 114, a CR type low pass filter, a moving average filter, or the like is conceivable. In this Embodiment, the configuration in a case where the moving average filter As illustrated in Fig. 3A is used will be described.

In Fig. 3A, D indicates a delay element. A tap count of the moving average is $k$, that is, $k$ stages of delay elements are disposed. A moving average is calculated by summing outputs from each stage of the delay elements and dividing it by $k$.

A cutoff frequency of the filter is determined corresponding to $k$, and the cutoff frequency is designed corresponding to the characteristics of the electrolytic cell 101 that is connected. In the following, a relation between the acceptable ramp rate of the electrolytic cell 101 and the tap count $k$ of the moving average filter will be described.

The acceptable ramp rate of the electrolytic cell 101 that is controlled (for example, the shortest time accepted as the time for an electrolysis power to reach 100% from 0% of the rating) is set to T. An update interval of the electrolysis power command value is set to 1/fs. That is, fs is a sampling frequency. In this case, $k$ is a natural number proportional to T and fs. As a more rigorous example, $k$ is a natural number close to (0.443/1.1)*π*fs*T. This fs is a value determined by a configuration of a control system, and T is a value determined by a catalog value of a used electrolytic cell. A user can input these values into the filter part 114.

As illustrated in Fig. 3A, the filter part 114 may operate based on a gain and an offset (details will be described below).

A basis for a value of $k$ in Fig. 3A will be described using Fig. 3B. As a specific example, the ramp characteristics of the electrolytic cell 101 are approximated by a CR circuit. In that case, the acceptable ramp rate T is $T \approx 2.2CR$. However, C is a capacitance value, and R is a resistance value. The cutoff frequency of the CR circuit is expressed by fc = $1/(2\pi CR)$. On the other hand, the relation between the tap count $k$ of the moving average filter and its cutoff frequency fc is fc $\approx 0.443 * $fs/$k$ (However, 1/fs is a time interval of data). In order to realize a characteristic approximate to a CR circuit by a moving average filter, the cutoff frequency fc is deleted from the above two relations to obtain the following equation.

$$k \approx (0.443/1.1) * \pi * \text{fs} * \text{T}$$

Thus, by using the moving average filter as the lowpass filter, design of the filter part 114 is facilitated. Another CR filter (for example, a primary CR filter or a secondary CR filter) can be also used as a lowpass filter, and also in that case, the design of the filter part 114 is facilitated.

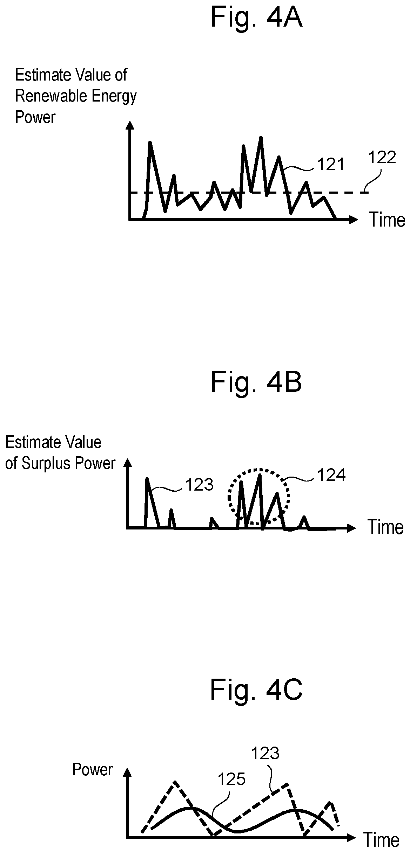

Figs. 4A-4C illustrates a progress example of arithmetic in this Embodiment. Fig. 4A shows an estimate value of renewable energy power 121 and a sold power 122 (a sold power threshold value). Fig. 4B shows a value obtained by subtracting the sold power 122 from the estimate value of renewable energy power 121, that is, an estimate value of surplus power 123. Fig. 4C shows an enlarged view of the estimate value of surplus power 123 (that is, an input of the filter part 114) and an electrolysis power command value 125 (that is, an output of the filter part 114) in a part of Fig. 4B (for example, inside the dashed line area 124).

As illustrated in Fig. 4C, the control apparatus 110 calculates the electrolysis power command value by performing the filter process for a past (that is, before predetermined timing) estimate value of the surplus power and a present time (that is, at predetermined timing) estimate value of the surplus power, based on the acceptable ramp rate of the electrolytic cell 101. Then, the control apparatus 110 input the calculated electrolysis power command value into the AC/DC converter 104. Calculation and input of the electrolysis power command value can be repeated for each predetermined operation cycle.

As illustrated in Fig. 4C, a change of the electrolysis power command value 125 is more moderate than a change of the estimate value of surplus power 123 and is more likely to be suppressed equal to or less than the acceptable ramp rate of the electrolytic cell 101. Thus, the utilization efficiency is improved while avoiding the deterioration of the water electrolysis apparatus.

Here, in Fig. 4C, due to the filter characteristics, the electrolysis power command value 125 changes more slowly than the estimate value of surplus power 123 at a rise, and since the change is small, it can be input into the electrolytic cell 101. On the other hand, at a fall, the electrolysis power command value 125 becomes larger than the estimate value of surplus power 123. Thus, the electrolysis power exceeds the surplus power, resulting in a shortage of power in some cases. In this case, a shortfall can be made as small as possible by subtracting the shortfall from the sold power (that is, the power supplied to the system is made smaller) or by adding a gain and an offset to an output of the filter. Thus, the variation of the output of the filter can be appropriately controlled by performing the filter process based on the gain and the offset.

Values of the gain and the offset can be appropriately designed by those skilled in the art. For example, the gain may be set to 1/2, and the offset may be set to 1/2. When such values are used, since the final electrolysis power command value becomes $0 \leq (1/2) + (1/2) \cdot \cos(\omega t) \leq 1$ when an internal output of the filter is assumed to be a cosine wave of an angular velocity $\omega$, that is, $\cos(\omega t)$, the electrolysis power command value can be reliably made positive.

Alternatively, by using these values as initial values, after operation data of the renewable energy site is accumulated, the electrolysis power command value can be calculated from the operation data. As an example, as in Fig. 3A, a least-square method may be used. When the gain deviates significantly from 1, since the time required for the electrolysis power command value to rise from 0% to 100% of the rating of the electrolytic cell 101 also varies in proportion to 1/gain, it is preferred to determine the acceptable ramp rate to a value where the gain is taken into consideration.

<Embodiment 2>

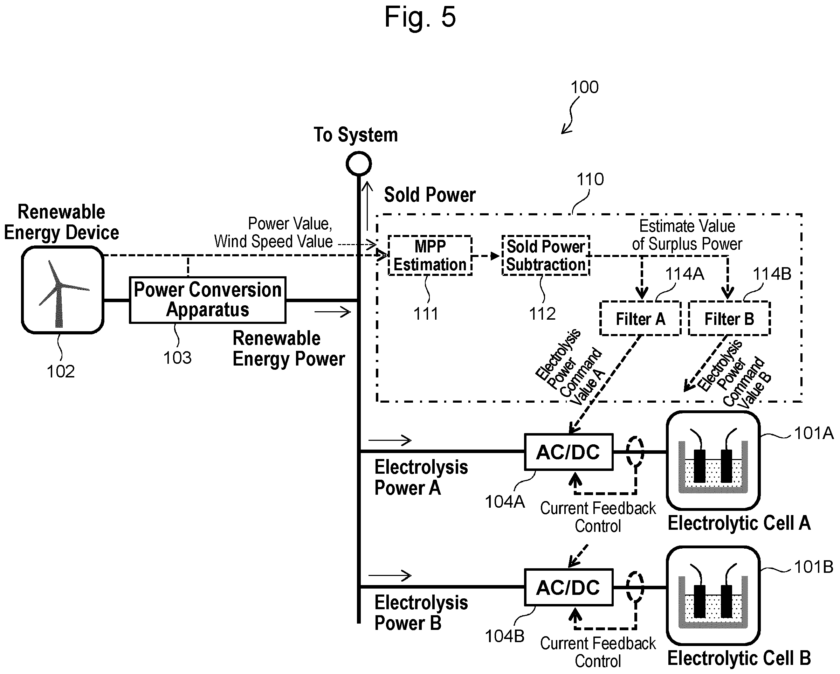

Fig. 5 illustrates the configuration of the water electrolysis system 100 according to Embodiment 2 of the present invention. In Embodiment 2, a first electrolytic cell 101A and a second electrolytic cell 101B are disposed as a plurality of electrolytic cells. A first filter part 114A and a second filter part 114B are disposed as a plurality of filter parts. Each filter part calculates the electrolysis power command value for each of the electrolytic cells having different characteristics based on the estimate value of the surplus power. In the following, descriptions of parts common to Embodiment 1 is omitted in some cases.

Here, one renewable energy device 102 (in the example of Fig. 5, it is set as wind power generation) is connected to wiring to the system through a power conditioner (PCS) as the power conversion apparatus 103. As in Embodiment 1, the plurality of renewable energy devices 102 may be connected to aggregate the surplus power.

In Embodiment 2, there are a plurality of electrolytic cells, and the respective electrolytic cells have mutually different acceptable ramp rates. Typically, as a type of electrolytic cell, like an Anion Exchange Membrane (AEM) electrolytic method, input of varying power with a large ramp rate is difficult, but it is efficient under stable power, while, like a Proton Exchange Membrane (PEM) electrolytic cell, input of varying power with a large ramp rate is possible, but an electrolytic efficiency is not as high as the AEM.

Thus, a plurality of filters suitable for the respective acceptable ramp rates are prepared to distribute varying renewable energy power. That is, the water electrolysis system 100 calculates the respective electrolysis power command values for the respective plurality of electrolytic cells by performing the filter processes based on the respective acceptable ramp rates of the respective electrolytic cells.

As a specific example, the first filter part 114A performs the filter process based on the acceptable ramp rate of the first electrolytic cell 101A to calculate a first electrolysis power command value (a command value A), and inputs it into a first AC/DC converter 104A. On the other hand, the second filter part 114B performs the filter process based on the acceptable ramp rate of the second electrolytic cell 101B to calculate a second electrolysis power command value (a command value B), and inputs it into a second AC/DC converter 104B (in Fig. 5, the arrow of the command value B is split in its course to improve visibility).

It is desired that a sum from the plurality of filter parts (that is, the sum of the power values corresponding to the respective electrolysis power command values) does not exceed the original estimate value of the surplus power. When the sum exceeds the estimate value, that is, there is a power shortage, the shortfall can be subtracted from the sold power (that is, the power supplied to the system is reduced), or a gain and an offset can be added to the output of the filter to make the shortfall as small as possible. The values of the gain and the offset can be appropriately designed by those skilled in the art.

Thus, with Embodiment 2, the plurality of electrolytic cells with different characteristics can be efficiently utilized.

<Embodiment 3>

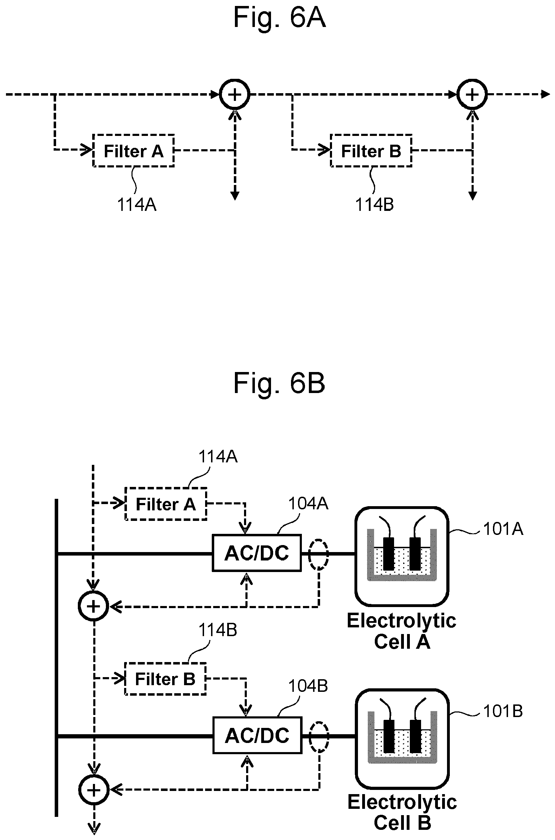

Fig. 6A illustrates a configuration of a filter part according to Embodiment 3 of the present invention. In this Embodiment, the plurality of electrolytic cells are disposed as in Embodiment 2, and further, the filter processes related to the respective electrolytic cells are connected in cascade. The filter parts calculate the electrolysis power command values for the respective electrolytic cells with different characteristics. In the following, descriptions of parts common to Embodiment 2 are omitted in some cases.

Fig. 6B illustrates a configuration of a filter part and an electrolytic cell according to Embodiment 3. First, based on the estimate value of the surplus power, the first filter part 114A calculates the first electrolysis power command value for the first electrolytic cell 101A, and inputs it into the first AC/DC converter 104A. Then, the first electrolysis power command value (or power value that has actually flown into the first electrolytic cell 101A corresponding to the first electrolysis power command value) is subtracted from the original estimate value of the surplus power. Based on this subtraction result, the second filter part 114B calculates the second electrolysis power command value for the second electrolytic cell 101B, and inputs it into the second AC/DC converter 104B.

When any of the electrolysis power command values becomes negative (that is, when there is a power shortage), the shortfall can be subtracted from the sold power (that is, the power supplied to the system is reduced), or a gain and an offset can be added to the output of the filter to make the shortfall as small as possible. The values of the gain and the offset can be appropriately designed by those skilled in the art.

Thus, with Embodiment 3, the plurality of electrolytic cells with different characteristics can be efficiently utilized. In particular, since the result of the filter process in a preceding stage can be utilized in the filter process in a subsequent stage by connecting the filter process in cascade, the power supplied to the system can be stabilized.

<Embodiment 4>

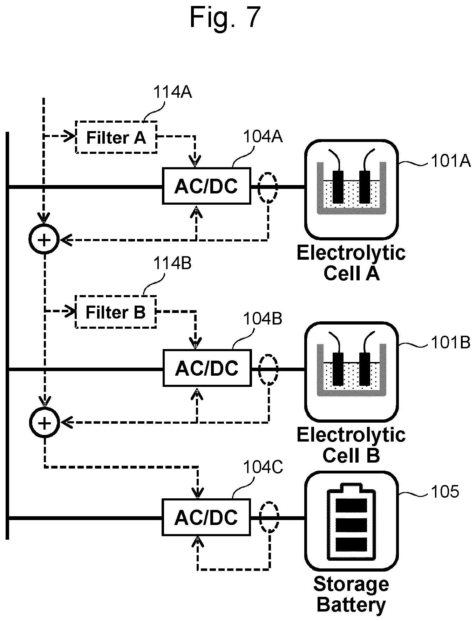

Fig. 7 illustrates a configuration of a filter part and an electrolytic cell according to Embodiment 4. In this Embodiment, the water electrolysis system further manages a power supply of the renewable energy for a storage battery 105. In the following, descriptions of parts common to Embodiment 3 are omitted in some cases.

In Embodiment 3, by replacing the electrolytic cell connected to the power control device (the third AC/DC converter 104C in Fig. 7) at the final stage with the storage battery 105, it is possible to compensate for the power lacking in the electrolysis.

The water electrolysis system according to Embodiment 4 calculates a storage power command value based on the estimate value of the renewable energy power and the electrolysis power command value. First, similarly to Embodiment 3, based on the estimate value of the renewable energy power, the first filter part 114A calculates the first electrolysis power command value, and the second filter part 114B calculates the second electrolysis power command value. Then, the first electrolysis power command value and the second electrolysis power command value are subtracted from the original estimate value of the surplus power, and thus, the storage power command value is calculated.

Then, the water electrolysis system inputs this storage power command value into the third AC/DC converter 104C, which is the power conversion apparatus for the storage battery. Corresponding to this, the third AC/DC converter 104C controls charging and discharging of the storage battery 105. When the storage power command value is positive, charging is performed. When the storage power command value is negative, discharging is performed, and this makes it possible to avoid reduction in power supplied to the system.

Thus, with Embodiment 4, use of the storage battery that can control charging and discharging more freely compared with the electrolytic cell allows further stabilizing the power supplied to the system.

In the example in Fig. 7, while the filter part and the electrolytic cell are connected in cascade similarly to Embodiment 3, they may be connected in parallel like Embodiment 2, or the filter part and the electrolytic cell may be each independent as in Embodiment 1.

<Embodiment 5>

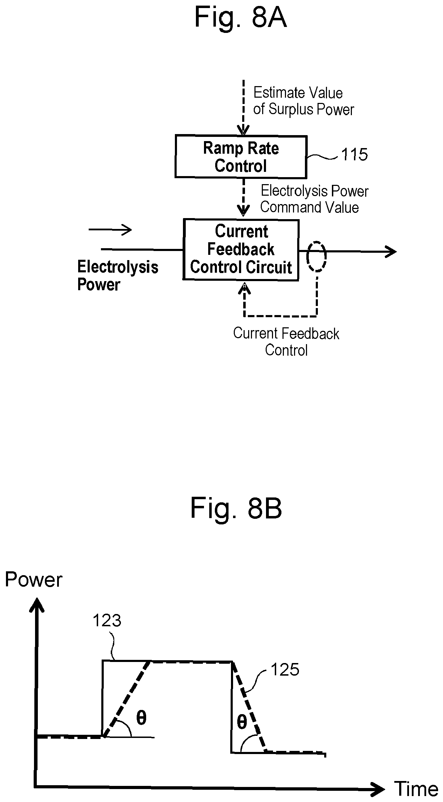

Figs. 8A and 8B illustrates an outline of processes according to Embodiment 5 of the present invention. In this Embodiment, the conversion process for calculating the electrolysis power command value from the estimate value of the surplus power in Embodiment 1 is changed to a process other than the filter process. In the following, descriptions of parts common to Embodiment 1 are omitted in some cases.

In this Embodiment, as illustrated in Fig. 8A, as the conversion process for calculating the electrolysis power command value from the estimate value of the surplus power, a process by a ramp rate control part 115 is performed instead of the filter part 114.

Fig. 8B illustrates input-output characteristics according to this Embodiment. The ramp rate control part 115 converts the steeply changing estimate value of surplus power 123 into the electrolysis power command value 125 changing at a ramp rate (a slope is expressed by θ) equal to or less than a preliminarily predetermined acceptable ramp rate.

In the example in Fig. 8B, the estimate value of surplus power 123 changing stepwise is converted into the electrolysis power command value 125 changing at a specified ramp rate. Corresponding to an acceptable ramp rate of an electrolytic cell that is connection destination, the ramp rate in this case can be preliminarily determined as a value equal to or less than the acceptable ramp rate.

Thus, in this Embodiment, the conversion process on the estimate value of surplus power is achieved as a process of changing variation with a rate exceeding the acceptable ramp rate to the variation with the rate equal to or less than the acceptable ramp rate. This results in being able to obtain an effect similarly to Embodiment 1 without using the filter control.

While the above-described Embodiment 5 is a modification of Embodiment 1, similar modifications can be performed on any of Embodiments 2 to 4.

<Embodiment 6>

A water electrolysis system according to this Embodiment calculates a gain and an offset of a filter part using the least-square method. In the following, descriptions of parts common to Embodiment 1 are omitted in some cases.

The gain and the offset can be determined based on past information (for example, information from the present to the past one year) in the water electrolysis system. As a more specific example, based on the information of the past one year, as illustrated in Fig. 3A, the gain and the offset can be calculated using the least-square method.

A specific application method of the least-square method can be appropriately designed by those skilled in the art, and one example will be described below. A model function representing the estimate value of the surplus power is set to be $G + O \cdot \cos(\omega t)$. However, G is a gain, O is an offset, $\omega$ is an angular velocity corresponding to a cutoff frequency of a filter, and t is time. For this model function, the values of G and O that best fit the past estimate value of the surplus power are determined using the least-square method.

With Embodiment 6, it is possible to determine the gain and the offset of the filter part to more appropriate values.

While the above-described Embodiment 6 is a modification of Embodiment 1, similar modifications can be performed on any of Embodiments 2 to 4.

<Embodiment 7>

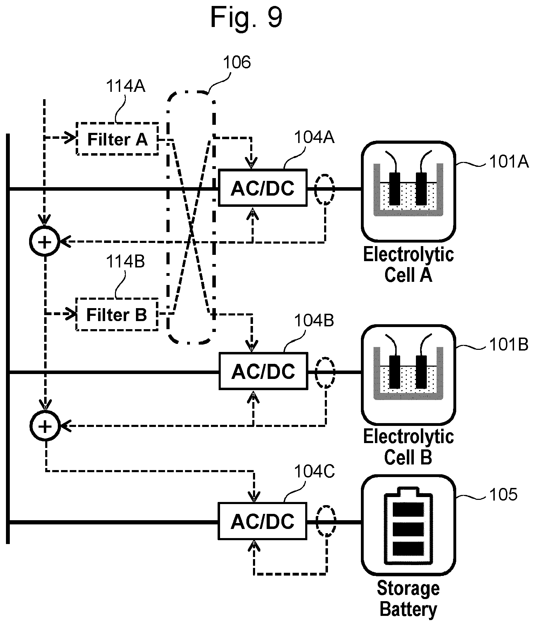

Fig. 9 illustrates a configuration of a filter part and an electrolytic cell according to Embodiment 7 of the present invention. In this Embodiment, correspondence relation between the filter part (each corresponding to a specific acceptable ramp rate) and the electrolytic cell is interchanged according to a situation in Embodiment 4. In the following, descriptions of parts common to Embodiment 4 are omitted in some cases.

First, similarly to Embodiment 4, a water electrolysis system according to this Embodiment calculates the respective electrolysis power command values for the respective electrolytic cells by performing the conversion processes based on respectively different acceptable ramp rates. Furthermore, the water electrolysis system according to this Embodiment interchanges the acceptable ramp rates related to the plurality of electrolytic cells with one another based on a predetermined criterion.

In the example in Fig. 9, the water electrolysis system includes a command value relocation block 106. The command value relocation block 106 controls correspondence relation between the filter part and the AC/DC converter to interchange them corresponding to the situation.

More specific example will be described below. The first filter part 114A performs the filter process based on a first acceptable ramp rate to calculate the first electrolysis power command value. The second filter part 114B performs the filter process based on a second acceptable ramp rate to calculate the second electrolysis power command value. The command value relocation block 106 determines whether to input the first electrolysis power command value into the first AC/DC converter 104A and input the second electrolysis power command value into the second AC/DC converter 104B or conversely, to input the first electrolysis power command value into the second AC/DC converter 104B and input the second electrolysis power command value into the first AC/DC converter 104A.

Magnitude relation between the acceptable ramp rates of the respective electrolytic cells at the initial stage immediately after the water electrolysis system has operated is likely to interchange depending on a lapse of operation time. At the initial stage, an electrolytic cell with a high acceptable ramp rate will be heavily used in a loose pass of a filter (that is, at a high acceptable ramp rate). An update of the acceptable ramp rate is needed to also extend the lifetime of such electrolytic cells. This Embodiment achieves this.

A criterion for determining interchange can be appropriately designed by those skilled in the art, and for example, an elapsed time can be set as the criterion. As a more specific example, the acceptable ramp rate can be interchanged each time a predetermined time elapses. When the acceptable ramp rate of each electrolytic cell is measurable, the measured acceptable ramp rate can be set as the criterion, and it is possible to interchange the filter part such that the filter part corresponding to the higher acceptable ramp rate is allocated to the electrolytic cell with a higher measured acceptable ramp rate.

While the single electrolytic cell is used as in Embodiment 1, it is possible to deal with by changing the configuration of the filter part in accordance with the update of the acceptable ramp rate, when a plurality of filter parts and a plurality of electrolytic cells are included, it is preferred to appropriately interchange correspondence relation of them.

While the above-described Embodiment 7 is a modification of Embodiment 4, similar modifications can be performed on any of Embodiments 2, 3, 5, and 6.

While in each of above-described Embodiments, the power conversion apparatus of the electrolytic cell is the AC/DC converter, as a modification example, it is possible to use a DC/DC converter connected to the system via an inverter.

Reference Signs List

| | |
|---|---|
| 100 | Water electrolysis system |
| 101 | Electrolytic cell |
| 101A | First electrolytic cell |
| 101B | Second electrolytic cell |
| 102 | Renewable energy device |
| 103 | Power conversion apparatus (power conversion apparatus connected to renewable energy device) |
| 104 | AC/DC converter (power conversion apparatus for electrolytic cell) |
| 104A | First AC/DC converter (power conversion apparatus for electrolytic cell) |
| 104B | Second AC/DC converter (power conversion apparatus for electrolytic cell) |
| 104C | Third AC/DC converter |
| 105 | Storage battery |
| 106 | Command value relocation block |
| 110 | Control apparatus |
| 111 | MPP estimation part |
| 112 | Sold power subtraction part |
| 113 | Aggregation part |
| 114 | Filter part |
| 114A | First filter part |
| 114B | Second filter part |
| 115 | Ramp rate control part |
| 121 | Estimate value of renewable energy power |
| 122 | Sold power |
| 123 | Estimate value of surplus power |
| 124 | Dashed line area |
| 125 | Electrolysis power command value |

**Claims**

1. A water electrolysis system that manages power supply of renewable energy for a system and an electrolytic cell of a water electrolysis apparatus, the water electrolysis system:

   obtains renewable energy power and operation information of renewable energy device from a power conversion apparatus connected to the renewable energy device;
   calculates an estimate value of the renewable energy power based on the renewable energy power and the operation information;

   calculates an estimate value of a surplus power at a predetermined timing based on the estimate value of the renewable energy power and a sold power;
   calculates an electrolysis power command value by performing a conversion process based on an acceptable ramp rate of the electrolytic cell with respect to the estimate value of the surplus power before the predetermined timing and the estimate value of the surplus power at the predetermined timing; and
   inputs the electrolysis power command value into a power conversion apparatus of the electrolytic cell.

2. The water electrolysis system according to claim 1, wherein the conversion process is performed by using a lowpass filter.

3. The water electrolysis system according to claim 2, wherein the lowpass filter is a moving average filter.

4. The water electrolysis system according to claim 2, wherein the lowpass filter is a CR filter.

5. The water electrolysis system according to claim 1,

   wherein the electrolytic cells are disposed in plural,
   wherein the plurality of electrolytic cells have mutually different acceptable ramp rates, and
   wherein the water electrolysis system calculates respective electrolysis power command values for respective electrolytic cells by performing the conversion processes based on respective acceptable ramp rates of respective electrolytic cells.

6. The water electrolysis system according to claim 5, wherein the conversion processes related to respective electrolytic cells are connected in cascade.

7. The water electrolysis system according to claim 1,

   wherein the water electrolysis system manages the power supply of the renewable energy for a storage battery, and
   wherein the water electrolysis system calculates a storage power command value based on the estimate value of the renewable energy power and the electrolysis power command value; and
   inputs the storage power command value into a power conversion apparatus of the storage battery.

8. The water electrolysis system according to claim 1, wherein the conversion process is a process that changes a variation with a rate exceeding the acceptable ramp rate to a variation with a rate equal to or less than the acceptable ramp rate.

9. The water electrolysis system according to claim 2, wherein the conversion process is performed based on a gain and an offset.

10. The water electrolysis system according to claim 9, wherein the gain and the offset are calculated using a least-square method.

11. The water electrolysis system according to claim 1,

wherein the electrolytic cells are disposed in plural,
wherein the water electrolysis system calculates respective electrolysis power command values for respective electrolytic cells by performing the conversion processes based on respectively different acceptable ramp rates, and
wherein the water electrolysis system interchanges the acceptable ramp rates related to the plurality of electrolytic cells with one another based on a predetermined criterion.

# Fig. 1A

## (Related Art)

To System

Sold Power

Limit Command Value
from System

Power Conversion
Apparatus

Power Conversion
Apparatus

Renewable Energy
Device (PV)

Renewable
Energy Power

Hydrogen
Production
Power

Electrolytic
Cell

Flow of Power

# Fig. 1B

## (Related Art)

Renewable Energy Device (PV)
Output Power

Electrolysis
Command Value

Sold Power
Command Value

Flow of Information

# Fig. 2

EP 4 283 813 A1

Fig. 3A

Estimate Value
of Surplus Power

| 1 | 2 | | k |
| D | D | ⋯ | D |

~114

Sum/**k**

Example: Determine
by Least-Square
Method

Gain

Offset

⊕

Electrolysis
Power
Command
Value

Fig. 3B

Power
Value

CR

$T \fallingdotseq 2.2CR$

Time

# Fig. 4A

Estimate Value of
Renewable Energy
Power

Time

121    122

# Fig. 4B

Estimate Value
of Surplus Power

123    124

Time

# Fig. 4C

Power

123

125

Time

## Fig. 5

EP 4 283 813 A1

# Fig. 6A

# Fig. 6B

# Fig. 7

# Fig. 8A

Estimate Value
of Surplus Power

Ramp Rate
Control ⌇—115

Electrolysis Power
Command Value

Current
Feedback
Control Circuit

Electrolysis
Power

Current Feedback
Control

# Fig. 8B

Power

123

125

θ

θ

Time

# Fig. 9

Europäisches
Patentamt
European
Patent Office
Office européen
des brevets

# EUROPEAN SEARCH REPORT

Application Number

EP 23 15 8405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/114395 A1 (HINATSU JIM [CA] ET AL) 6 May 2010 (2010-05-06) * paragraphs [0068], [0116] – [0125]; figure 3 * ----- | 1-11 | INV. H02J3/28 H02J15/00 |
| X | US 2020/106385 A1 (WENZEL MICHAEL J [US] ET AL) 2 April 2020 (2020-04-02) * paragraphs [0036], [0069] – [0075], [0101], [0102] * ----- | 1 | |
| A | EP 2 983 056 A1 (HITACHI LTD [JP]) 10 February 2016 (2016-02-10) * abstract * ----- | 1-11 | |

TECHNICAL FIELDS
SEARCHED      (IPC)

H02J

The present search report has been drawn up for all claims

| Place of search | Date of completion of the search | Examiner |
|---|---|---|
| Munich | 20 October 2023 | Grosse, Philippe |

EPO FORM 1503 03.82 (P04C01)

## ANNEX TO THE EUROPEAN SEARCH REPORT
## ON EUROPEAN PATENT APPLICATION NO.

EP 23 15 8405

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2023

| Patent document cited in search report | | Publication date | Patent family member(s) | | Publication date |
|---|---|---|---|---|---|
| US 2010114395 | A1 | 06-05-2010 | CA | 2741129 A1 | 06-05-2010 |
| | | | CA | 2928768 A1 | 06-05-2010 |
| | | | CN | 102264950 A | 30-11-2011 |
| | | | EP | 2350352 A1 | 03-08-2011 |
| | | | EP | 3517653 A1 | 31-07-2019 |
| | | | ES | 2901112 T3 | 21-03-2022 |
| | | | PT | 3517653 T | 29-07-2021 |
| | | | US | 2010114395 A1 | 06-05-2010 |
| | | | US | 2012175952 A1 | 12-07-2012 |
| | | | US | 2012175954 A1 | 12-07-2012 |
| | | | WO | 2010048706 A1 | 06-05-2010 |
| US 2020106385 | A1 | 02-04-2020 | NONE | | |
| EP 2983056 | A1 | 10-02-2016 | EP | 2983056 A1 | 10-02-2016 |
| | | | JP | 6257911 B2 | 10-01-2018 |
| | | | JP | 2014203274 A | 27-10-2014 |
| | | | WO | 2014163044 A1 | 09-10-2014 |

EPO FORM P0459

For more details about this annex : see Official Journal of the European Patent Office, No. 12/82

**EP 4 283 813 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019173082 A

- JP 2018085862 A